# DEMANDE DE BREVET EUROPEEN

(11) **EP 4 385 955 A1**
(43) Date de publication de la demande: **19.06.2024**
(21) Numéro de dépôt: 23194045.3
(22) Date de dépôt: 29.08.2023
(51) Int. Cl.: C02F 1/467, C02F 1/00, E04H 4/12, B01D 35/027, B01D 35/26, C02F 103/42

(54) **CELLULE D'ÉLECTROLYSE POUR LA DÉSINFECTION DE L'EAU, NOTAMMENT DANS UNE PISCINE TRAITÉE AU SEL, ET GROUPE DE FILTRATION ÉQUIPÉE D'UNE TELLE CELLULE**

(30) Priorité: 13.12.2022 FR 2213279
(71) Demandeur: Groupe Waterair S.A.S., 68580 Seppois le Bas (FR)
(72) Inventeur: BILLET, Christophe, 68460 LUTTERBACH (FR); STEINBAUER, Thierry, 90200 GIROMAGNY (FR)
(74) Mandataire: Cabinet Laurent & Charras

(57) **Abrégé**

L'invention concerne une cellule d'électrolyse (1) pour la désinfection de l'eau, notamment dans une piscine traitée au sel, ladite cellule comportant des électrodes (2) positionnées à une distance relative l'une de l'autre et raccordées aux pôles opposés d'une source de courant continu. Elle comporte un culot de montage (3) destiné à être monté dans un groupe de filtration (30) d'eau, de sorte que ladite cellule d'électrolyse (1) est immergée dans l'eau traversant ledit groupe de filtration. Les électrodes (2) sont fixées audit culot de montage (3) par l'une de leurs extrémités (2a), et s'étendent en porte-à-faux à partir dudit culot de montage (3) pour être en contact avec l'eau traversant ledit groupe de filtration. En outre, le culot de montage (3) comporte un ou plusieurs évents d'échappement des gaz (12) destinés à communiquer avec l'eau traversant ledit groupe de filtration (30) permettant d'évacuer automatiquement dans l'eau les éventuels gaz issus de l'électrolyse.

## Description

### Domaine technique

La présente invention concerne une cellule d'électrolyse pour la désinfection de l'eau, notamment dans une piscine traitée au sel, ladite cellule comportant des électrodes positionnées à une distance relative l'une de l'autre et raccordées aux pôles opposés d'une source de courant continu.

L'invention concerne également un groupe de filtration pour le traitement d'eau, équipé d'une telle cellule d'électrolyse, ledit groupe de filtration comportant au moins une bouche d'aspiration, un couloir d'amenée d'eau, une pompe hydraulique, une colonne de filtration, une colonne d'aspiration et un orifice de refoulement.

### Technique antérieure

Le traitement au sel d'une piscine nécessite l'installation d'un électrolyseur au sel, dont la pièce principale est une cellule d'électrolyse raccordée à une source de courant continu. La cellule d'électrolyse a pour fonction d'assurer la production électrolytique, à l'origine de la transformation des molécules de sel (NaCl) en chlore naturel (hypochlorite de sodium) dans l'eau de la piscine. Elle assure ainsi la désinfection de l'eau de la piscine. Elle se compose généralement de plaques ou de grilles en titane recouvertes de ruthénium. Le bon traitement de l'eau de la piscine dépend de l'état de fonctionnement de la cellule. Une fois usée, elle doit être remplacée. Sa durée de vie est en moyenne de 4 à 7 ans.

La cellule d'électrolyse pour piscine est à ce jour intégrée en série ou en parallèle (by-pass) à la tuyauterie de refoulement du système de filtration de la piscine, ce qui implique d'enfermer la cellule dans un manchon étanche, en forme de L, ou en forme de T. Le coffret de pilotage de la cellule d'électrolyse est positionné à proximité du coffret électrique qui alimente la piscine et est généralement asservi à la pompe de filtration. Le coffret de pilotage et la cellule d'électrolyse ne fonctionnent donc que lorsque la pompe de filtration est en marche. Cependant, les constructeurs ajoutent soit un système de détection de gaz (manque d'eau) installé dans la cellule, soit un contrôleur de débit (flow switch) installé sur la filtration pour conditionner la mise en route de la cellule d'électrolyse, ce qui renchérit son coût et complexifie son installation.

Une cellule d'électrolyse, étant un produit consommable, doit être accessible pour permettre les diverses opérations de maintenance et/ou son éventuel remplacement. Pour avoir accès à cette cellule, la tuyauterie sur laquelle elle est montée doit également être accessible. Cette contrainte limite l'utilisation des cellules d'électrolyse uniquement avec des filtrations traditionnelles, qui sont disposées dans des locaux techniques suffisamment grands pour accueillir tout le système.

En outre, la réaction chimique produite par l'électrolyse pour désinfecter l'eau du bassin produit deux composants gazeux : le dihydrogène H2 et le dichlore C12. Ces deux composants peuvent être dangereux pour diverses raisons : le H2 est explosif et le Cl2 est toxique. L'inconvénient des cellules d'électrolyse actuelles vient du fait qu'elles sont hermétiquement enfermées dans un manchon, et qu'en cas de disfonctionnement de la pompe, du gaz peut s'accumuler dans ledit manchon créant un danger pour l'installation et pour les utilisateurs. Enfin, pour réaliser les opérations de maintenance et/ou le remplacement de la cellule, il faut pouvoir isoler celle-ci en fermant les vannes de circulation d'eau afin de ne pas vider l'eau de la piscine, ce qui est contraignant et source d'incident si une vanne n'est pas correctement fermée.

Le document US2018273403 propose une pompe comportant une chambre d'électrolyse dans laquelle se trouve une électrode. Le culot de montage de la chambre d'électrolyse n'est pas immergé. Les gaz générés par l'électrolyse, toxiques et potentiellement explosifs, peuvent s'accumuler dans cet espace non immergé, ce qui pose un problème de sécurité.

Le document FR3054580 propose un dispositif de filtration comportant une pompe immergée, comportant des électrodes. En cas d'arrêt de la pompe, l'eau cesse de circuler, ce qui peut générer une accumulation des gaz générés par l'électrolyse, ce qui pose un problème de sécurité.

Le document WO2014072542 propose un couvercle de filtre de piscine pouvant comporter des électrodes pour l'électrolyse de l'eau salée. Le culot de montage de la chambre d'électrolyse n'est pas immergé. Les gaz générés par l'électrolyse, toxiques et potentiellement explosifs, peuvent s'accumuler dans cet espace non immergé, ce qui pose un problème de sécurité.

Les solutions actuelles ne sont donc pas satisfaisantes.

### Exposé de l'invention

La présente invention vise à pallier ces inconvénients en proposant une nouvelle conception de cellule d'électrolyse, qui n'est plus enfermée dans un manchon étanche, mais est spécifiquement conçue pour s'insérer directement dans un groupe de filtration d'eau, de sorte qu'elle est entièrement ouverte et immergée dans l'eau du bassin, est facilement accessible pour assurer sa maintenance et son remplacement, et est montée dans le groupe de filtration de sorte que les éventuels gaz issus de l'électrolyse de l'eau puissent s'échapper automatiquement et en toute sécurité aussi bien dans l'air que dans l'eau du bassin. En outre, l'invention vise également une cellule d'électrolyse capable de supporter différents accessoires de contrôle rendant cette cellule plurifonctionnelle.

Dans ce but, l'invention concerne une cellule d'électrolyse du genre indiqué en préambule, caractérisée en ce qu'elle comporte un culot de montage destiné à être monté dans un groupe de filtration d'eau, de sorte que ladite cellule d'électrolyse est immergée dans l'eau traversant ledit groupe de filtration, et en ce que lesdites électrodes sont fixées audit culot de montage par l'une de leurs extrémités, et s'étendent en porte-à-faux à partir dudit culot de montage pour être en contact avec l'eau traversant ledit groupe de filtration, lorsque ladite cellule d'électrolyse est montée dans ledit groupe de filtration.

Grâce à cette nouvelle conception, la cellule d'électrolyse est directement intégrée dans le groupe de filtration, ne nécessite pas une tuyauterie particulière pour être installée, ni de vanne pour l'isoler, rendant les opérations de maintenance et de remplacement de cette cellule plus simples et plus rapides.

Dans une forme préférée de l'invention, ledit culot de montage comporte des moyens de fixation destinés à coopérer avec des moyens de réception complémentaires prévus dans ledit groupe de filtration de sorte que ladite cellule d'électrolyse est montée dans ledit groupe de filtration de manière amovible.

Ces moyens de fixation peuvent comporter au moins une languette ressort pourvue d'un cran d'arrêt, agencée pour permettre un assemblage par clippage dans ledit groupe de filtration.

Ladite cellule d'électrolyse comporte avantageusement au moins un évent d'échappement des gaz destiné à communiquer avec l'eau traversant ledit groupe de filtration, et notamment plusieurs évents d'échappement des gaz délimités entre ladite au moins une languette ressort et une collerette d'appui prévue sur le culot de montage à l'opposé de ladite au moins une électrode.

Préférentiellement, lesdites électrodes sont liées l'une à l'autre par au moins une entretoise garantissant ladite distance relative entre elles.

Le culot de montage de ladite cellule d'électrolyse comporte un noyau central entouré d'une enveloppe, ledit noyau central étant électriquement isolant, et les extrémités correspondantes desdites électrodes étant noyées dans ledit noyau central et raccordées auxdits pôles par un câble électrique émergeant dudit noyau central et raccordé à un coffret de pilotage déporté.

Ledit câble électrique comporte avantageusement un connecteur étanche agencé pour connecter et déconnecter aisément la cellule d'électrolyse dudit câble la reliant audit coffret de pilotage déporté dans un local technique qui peut être éloigné d'une distance comprise entre 2m et 20m.

Selon les variantes de réalisation de l'invention, lesdites électrodes peuvent comporter un nombre de plaques compris entre deux et N, N étant un nombre pair ou impaire, lesdites plaques étant positionnées entre elles pour former un ou plusieurs couples comprenant une cathode et une anode.

Ledit culot de montage peut en outre comporter au moins un conduit traversant destiné à recevoir un accessoire de contrôle et/ou de traitement choisi dans le groupe comprenant un indicateur de colmatage, un correcteur de pH, ou similaire.

Dans ce but également, l'invention concerne un groupe de filtration du genre indiqué en préambule, caractérisé en ce qu'il comporte en outre au moins une cellule d'électrolyse pour la désinfection de l'eau telle que définie ci-dessus, immergée dans ledit groupe de filtration entre ladite bouche d'aspiration et ledit orifice de refoulement, ledit au moins un évent d'échappement des gaz étant configuré pour communiquer avec l'eau dudit couloir d'amenée d'eau.

Dans une forme préférée de l'invention, ladite cellule d'électrolyse est positionnée en aval de ladite colonne de filtration, de sorte que les électrodes de ladite cellule d'électrolyse ne sont pas soumises aux impuretés véhiculées par l'eau traversant ledit groupe de filtration.

Avantageusement, ledit couloir d'amenée d'eau comporte au moins un orifice de réception à travers duquel est positionnée ladite cellule d'électrolyse et auquel est fixé ledit culot de montage, permettant d'accéder facilement à ladite cellule.

En outre, ledit orifice de réception et le culot de montage délimitent entre eux des passages qui communiquent avec les évents d'échappement des gaz.

Ainsi, les fuites créées spécifiquement dans la zone de montage de la cellule d'électrolyse, rendent cette cellule non étanche et permettent à H2 de s'échapper en petite quantité dans l'air libre et au Cl2 de toujours se dissoudre dans l'eau du bassin.

De manière avantageuse, ledit au moins un conduit traversant prévu dans le culot de montage est accessible depuis ledit couloir d'amenée d'eau et peut comporter un accessoire de contrôle et/ou de traitement choisi dans le groupe comprenant un indicateur de colmatage, un correcteur de pH, ou similaire.

### Brève description des dessins

La présente invention et ses avantages apparaîtront mieux dans la description suivante de plusieurs modes de réalisation donnés à titre d'exemples non limitatifs, en référence aux dessins annexés, dans lesquels :
[Fig 1] est une vue de face d'une cellule d'électrolyse selon l'invention,
[Fig 2] est une vue de côté de la cellule de la figure 1,
[Fig 3] est une vue de dessus de la cellule de la figure 1,
[Fig 4] est une vue en coupe axiale de la cellule de figure 2,
[Fig 5] est une vue en perspective d'un groupe de filtration monté sur une paroi d'un bassin, équipé d'une cellule d'électrolyse selon la figure 1,
[Fig 6] est une vue de dessus agrandie de la figure 5, montrant les fuites de gaz autour de la cellule d'électrolyse, et
[Fig 7] est une vue en coupe axiale du groupe de filtration selon le plan de coupe VII-VII de la figure 5, montrant la circulation de l'eau et les fuites de gaz.

### Description des modes de réalisation

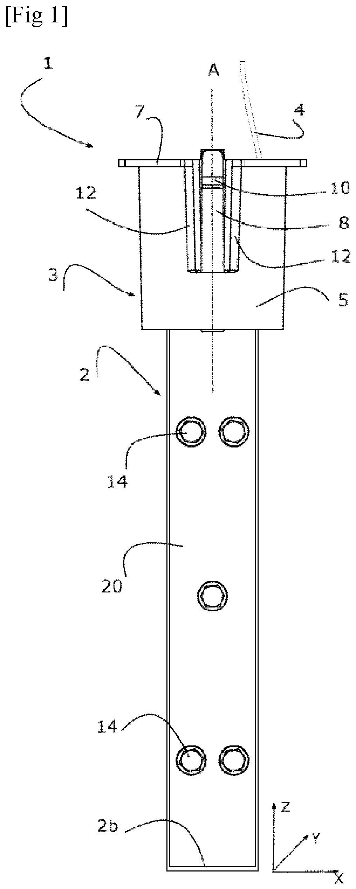

Dans les exemples de réalisation illustrés, les éléments ou parties identiques portent les mêmes numéros de référence. En outre, les termes qui ont un sens relatif, tels que vertical, horizontal, droite, gauche, avant, arrière, au-dessus, en-dessous, etc. doivent être interprétés dans des conditions normales d'utilisation de l'invention, et telles que représentées sur les figures. Les axes X, Y et Z sont quant à eux définis par un repère orthonormé illustré à la figure 1. Par ailleurs, les positions géométriques indiquées dans la description et les revendications, telles que « perpendiculaire », « parallèle », « symétrique » ne sont pas limitées au sens strict défini en géométrie, mais s'étendent à des positions géométriques qui sont proches, c'est-à-dire qui acceptent une certaine tolérance dans le domaine technique considéré, sans influence sur le résultat obtenu. Cette tolérance est notamment introduite par l'adverbe « sensiblement », sans que ce terme soit nécessairement répété devant chaque adjectif.

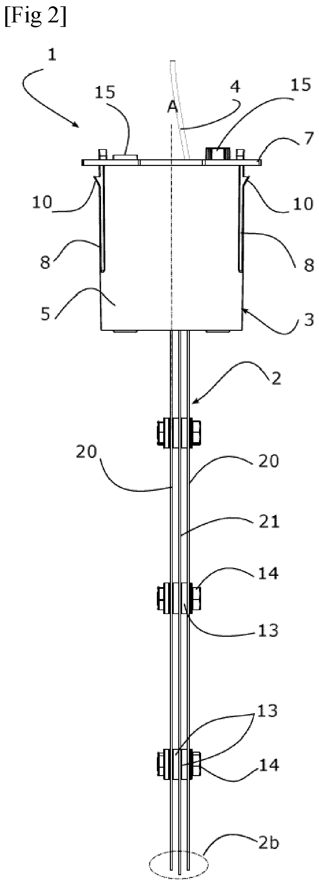

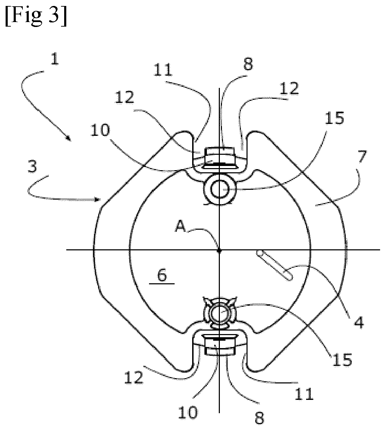

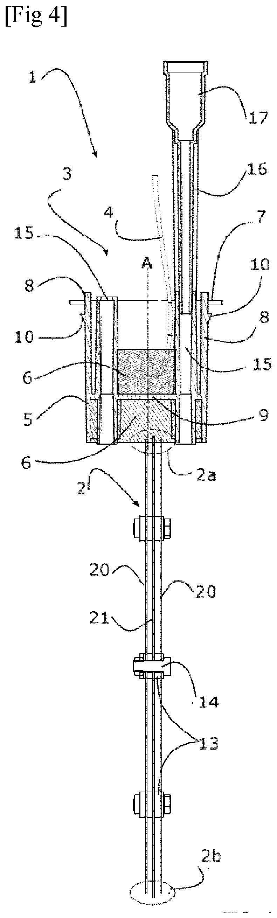

En référence aux figures 1 à 4, la cellule d'électrolyse 1 selon l'invention est constituée des éléments principaux suivants : des électrodes 2, un culot de montage 3, et un câble électrique 4 pour relier les électrodes 2 à une source de courant continu (non représentée) via un coffret de pilotage distant (non représenté).

Le culot de montage 3 présente, dans l'exemple représenté, une forme cylindrique d'axe A, sans que cette forme ne soit limitative, l'essentiel étant qu'elle soit complémentaire à celle des moyens de réception prévus dans le groupe de filtration et décrits plus loin. Elle pourrait présenter une forme ovoïde, polygonale, voire quelconque. Le culot de montage 3 comporte une enveloppe 5, un noyau central 6, une collerette d'appui 7 en partie supérieure, et au moins une languette ressort 8 latérale, et par exemple deux languettes ressort 8 latérales, sans que ce nombre ne soit limitatif.

L'enveloppe 5 constitue le support de tous les composants et de toutes les fonctionnalités de la cellule d'électrolyse 1, et permet son montage et sa fixation dans le groupe de filtration. Elle est de préférence réalisée dans un matériau polymère thermoplastique, électriquement isolant, tel qu'une résine naturelle, artificielle ou synthétique, ou tout autre matière techniquement équivalente, et est obtenue par moulage, injection, fabrication additive ou similaire.

Le noyau central 6 est réalisé de préférence dans une matière pouvant être surmoulée autour des extrémités 2a correspondantes des électrodes 2 et un câble électrique 4 pour assurer à la fois une liaison mécanique intime de ces pièces entre elles et une isolation électrique entre les électrodes 2. L'extrémité du câble 4 est munie d'un connecteur étanche (non représenté) permettant de connecter et de déconnecter aisément la cellule d'électrolyse 1 du câble 4 la reliant au coffret de pilotage distant (non représenté). Le coffret de pilotage est préférentiellement situé dans un local technique, séparé et éloigné du bassin et du groupe de filtration 30, pour protéger l'électronique de commande de la cellule d'électrolyse 1. Le local technique peut être distant d'au moins 2m à 20m, sans que ces valeurs ne soient limitatives.

Le noyau central 6 peut être rapporté par collage ou directement moulé à l'intérieur de l'enveloppe 5. A cet effet, l'enveloppe 5 peut comporter une cloison intermédiaire 9 pour faciliter la fabrication du noyau en deux parties. Le noyau central 6 peut être réalisé dans un matériau polymère thermodurcissable, électriquement isolant, telle qu'une résine naturelle, artificielle ou synthétique, ou tout autre matière techniquement équivalente. Bien entendu, tout autre moyen de maintien mécanique et d'isolation électrique compatible peut convenir en lieu et place du noyau central 6.

Les languettes ressorts 8 sont de préférence issues de la fabrication de l'enveloppe 5. Dans l'exemple représenté, elles s'étendent parallèlement à l'axe A, sont diamétralement opposées, et démarrent sensiblement après le premier tiers inférieur de la hauteur du culot. Elles comportent chacune un cran d'arrêt 10 orienté vers l'extérieur, pour réaliser un assemblage par clippage dans le groupe de filtration. Ce type d'assemblage a l'avantage d'être rapide, de ne nécessiter aucun outillage, et d'être réversible permettant le montage et le démontage de la cellule d'électrolyse 1 pour faciliter sa maintenance et/ou son remplacement. Bien entendu, tout autre moyen de fixation compatible peut convenir.

La collerette d'appui 7 s'étend perpendiculairement à l'axe A du culot de montage 3, et est saillante radialement de l'enveloppe 3 pour déterminer une position de montage axiale de la cellule dans le groupe de filtration. La collerette d'appui 7 est annulaire et peut présenter une forme circulaire, ovoïde, polygonale, voire quelconque. Dans l'exemple illustré, elle présente une forme circulaire, tronquée par quatre méplats, délimitant un carré. Les méplats peuvent constituer des moyens d'indexage définissant quatre positions de montage angulaires de la cellule d'électrolyse 1 dans l'orifice de réception 31 par rapport à la paroi latérale du couloir d'amenée d'eau 32. La collerette d'appui 7 comporte en outre deux encoches 11 au droit des languettes ressorts 8, de largeur supérieure à celle des languettes pour créer des passages formant des évents d'échappement des gaz 12, destinés à communiquer avec l'eau traversant le groupe de filtration, comme décrit plus loin.

Les électrodes 2, étant fixées au culot de montage 3 par une de leurs extrémités 2a, s'étendent en porte-à-faux depuis ledit culot jusqu' à l'autre de leurs extrémités 2b qui est libre. Dans l'exemple représenté, elles sont constituées de trois plaques 20, 21 formant par exemple deux anodes 20, et une cathode 21 située entre les deux anodes 20 pour créer deux couples « anode-cathode ». Les plaques 20, 21 sont de préférence réalisées en titane et recouvertes de ruthénium, ou en tout autre matériau ou combinaison de matériaux compatible. Elles sont positionnées parallèlement entre elles par leurs plus grandes faces, déterminant ainsi la surface de traitement de la cellule d'électrolyse 1 avec l'eau qui la traverse. Elles sont maintenues à une distance déterminée l'une de l'autre par des entretoises 13. Les entretoises 13 peuvent être constituées de rondelles ou similaires, maintenues entre elles par des organes de fixation 14 traversant les plaques 2a, 2b de part en part, tels que des vis bloquées par des écrous ou tout autre solution équivalente. Les entretoises 13 et les organes de fixation 14 sont réalisés dans des matériaux électriquement isolants, tels que du nylon, de la bakélite^{®}, ou toute autre matière compatible.

Le nombre de plaques 20, 21, formant les électrodes 2, n'est pas limité à trois. Il peut être égal à deux pour former au moins un couple « anode-cathode », ou égal à N, N pouvant être un nombre pair ou impaire, l'essentiel étant qu'elles soient positionnées l'une par rapport à l'autre pour former un ou plusieurs couples « cathode- anode ». Le nombre de plaques 20, 21, et la dimension de chacune des plaques sont des variables qui sont déterminées en fonction du volume d'eau à traiter.

Le culot de montage 3 comporte en outre un, deux ou plus de conduits traversants 15, disposés entre l'enveloppe 5 et le noyau central 6 ou au travers du noyau central 6. Ces conduits traversants 15 sont prévus pour recevoir un accessoire de contrôle et/ou de traitement de l'eau du bassin, tel qu'un indicateur de colmatage, un correcteur de pH, ou autre. A titre d'exemple, un indicateur de colmatage peut comporter un tube 16 pourvu d'un capteur de pression 17, emboité dans un des conduits traversants 15, sur le côté du culot extérieur, opposé aux électrodes 2. Le correcteur de pH (non représenté) peut comporter un tube permettant l'injection d'un produit adéquat tel que de l'acide chlorhydrique. Ces conduits traversants 15 assurent la communication de l'eau en circulation dans le groupe de filtration avec les accessoires portés par la cellule d'électrolyse 1.

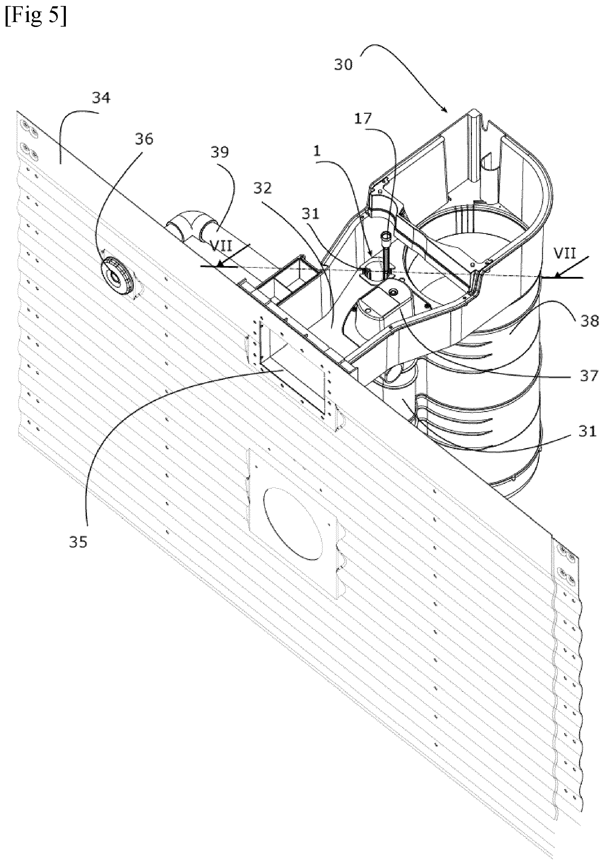

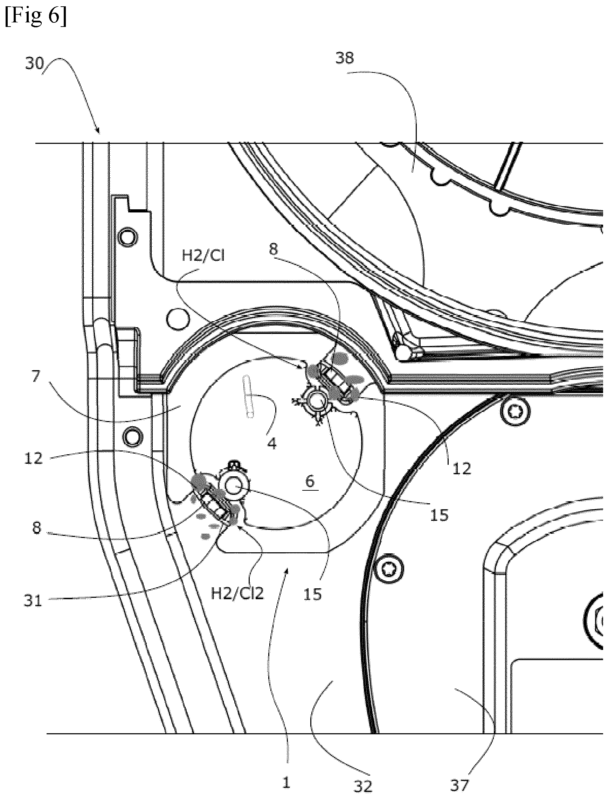

En référence à présent aux figures 5 à 7, la cellule d'électrolyse 1 selon l'invention est montée directement dans un groupe de filtration 30, et plus particulièrement dans un orifice de réception 31 prévu à cet effet. De manière préférentielle, l'orifice de réception 31 est aménagé dans un couloir d'amenée d'eau 32, pour communiquer avec une colonne d'aspiration 33. De cette manière, les électrodes 2 de la cellule d'électrolyse 1 s'étendent à l'intérieur de la colonne d'aspiration 33 et sont immergées dans l'eau traversant le groupe de filtration 30. Le culot de montage 3 est quant à lui solidarisé à l'orifice de réception 31. Il repose dans le fond du couloir d'amenée d'eau 32 par sa collerette d'appui 7, et est verrouillé en position montée par les deux crans d'arrêt 10 en butée sous la paroi de l'orifice de réception 31. Dans cette position, la cellule d'électrolyse 1 est accessible. Il suffit de retirer un couvercle (non représenté) qui ferme la partie supérieure du groupe de filtration 30, et de rapprocher avec deux doigts les deux languettes ressorts 8 pour dégager les crans d'arrêt 10 libérant la cellule d'électrolyse 1 de l'orifice de réception 31. De même, des accessoires peuvent être ajoutés sur le culot de montage 3 au droit des conduits traversants 10, également accessibles et amovibles facilement.

Le groupe de filtration 30 peut être un équipement neuf équipé de ladite cellule d'électrolyse 1, ou un équipement existant, modifiable via une légère intervention pour créer ledit orifice de réception 31. Le groupe de filtration 30 tel qu'illustré est connu et ne sera décrit que succinctement. Il est assemblé à l'arrière d'une paroi 34 d'un bassin (non représenté). On appelle « bassin » tout contenant d'eau à destination ludique, récréative, bien-être, thérapeutique, comme une piscine, un bain à remous, un bassin de plongeon, ou similaire, sans que ces exemples ne soient limitatifs.

Dans l'exemple représenté, le groupe de filtration 30 est attenant à la face arrière de la paroi 34 du bassin, mais pourrait être éloigné et logé dans un local technique par exemple. L'intérêt de monter le groupe de filtration 30 attenant au bassin réside dans la réduction de la longueur des canalisations du circuit hydraulique, ayant pour effet de limiter les pertes de charge et le risque de fuite. Pour permettre une communication hydraulique entre le bassin et le groupe de filtration 30, la paroi 34 du bassin comporte une bouche d'aspiration 35 située en partie supérieure, de préférence au moins en partie immergée sous le niveau d'eau contenu dans le bassin, et un orifice de refoulement 36 situé à proximité de la bouche d'aspiration 35, de préférence totalement immergé sous le niveau de l'eau. Dans cette variante de réalisation, le groupe de filtration 30 comporte également une pompe hydraulique 37, positionnée dans le couloir d'amenée d'eau 32 et communiquant avec la colonne d'aspiration 33 pour créer une dépression provoquant une circulation forcée de l'eau, une colonne de filtration 38, positionnée entre le couloir d'amenée d'eau 32 et la colonne d'aspiration 33, et un conduit de refoulement 39 reliant la colonne d'aspiration 33 à l'orifice de refoulement 36.

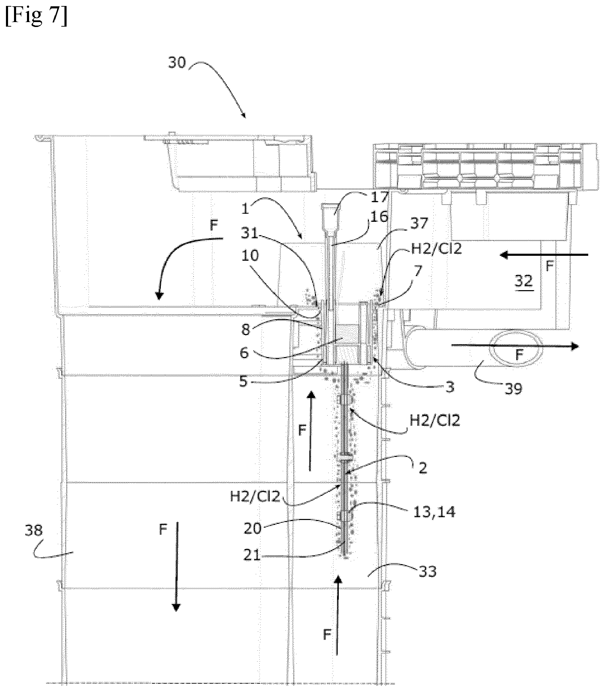

La circulation de l'eau dans le groupe de filtration 30 est schématisée par les flèches F dans la figure 7 : l'eau rentre dans le groupe de filtration 30 par la bouche d'aspiration 35 via un col de skimmer (non représenté), passe au-dessus de la pompe hydraulique 37, descends dans la colonne de filtration 38 au travers de médias filtrants (non représentés), remonte dans la colonne d'aspiration 33 où est située la cellule d'électrolyse 1, passe dans la volute de la pompe hydraulique 37 et est évacuée dans le conduit de refoulement 39 puis dans le bassin par l'orifice de refoulement 36.

La cellule d'électrolyse 1 est préférentiellement disposée dans la colonne d'aspiration 33, c'est-à-dire après la colonne de filtration 38, pour traiter l'eau déjà débarrassée de ses impuretés, protégeant ainsi la cellule de tout encrassement néfaste à son fonctionnement.

En outre, l'orifice de réception 31 et le culot de montage 3 de la cellule d'électrolyse 1 délimitent entre eux des passages qui communiquent avec les évents d'échappement des gaz 12. Ces passages forment ainsi des fuites situées au niveau des languettes ressort 8 et permettent aux bulles de gaz H2 et Cl2 (représentées par des points) d'être évacuées dans le volume d'eau du groupe de filtration 30 en cas de défaillance de la pompe hydraulique 37. Les bulles de gaz H2 peuvent remonter jusqu'à la surface de l'eau circulant dans le couloir d'amenée d'eau 32 pour s'échapper dans l'air. En effet, de l'eau est toujours présente dans le couloir d'amenée d'eau 32, que la pompe soit en fonctionnement ou non, et la surface de cette eau est toujours en contact avec l'atmosphère. En fonctionnement normal, ces bulles de gaz H2 et Cl2 sont aspirées par la pompe et diffusées dans le bassin via le conduit de refoulement 39 et l'orifice de refoulement 36.

Il ressort clairement de cette description que le positionnement de la cellule d'électrolyse 1 selon l'invention au sein du groupe de filtration 30 permet à l'utilisateur de la sortir et de la changer facilement, sans devoir fermer la moindre vanne. Le coffret de pilotage (non représenté) de la cellule d'électrolyse 1 peut être situé à une distance comprise en 2m et 20m du bassin, sans que ces valeurs ne soient limitatives.

La présente invention n'est bien entendu pas limitée aux exemples de réalisation décrits mais s'étend à toute modification et variante évidentes pour un homme du métier dans la limite des revendications annexées. En outre, les caractéristiques techniques des différents modes de réalisation et variantes mentionnés ci-dessus peuvent être, en totalité ou pour certaines d'entre elles, combinées entre elles.

## Revendications

1. Cellule d'électrolyse (1) pour la désinfection de l'eau, notamment dans une piscine traitée au sel, ladite cellule comportant des électrodes (2) positionnées à une distance relative l'une de l'autre et raccordées aux pôles opposés d'une source de courant continu, **caractérisée en ce qu'**elle comporte un culot de montage (3) destiné à être monté dans un groupe de filtration (30) d'eau, de sorte que ladite cellule d'électrolyse (1) est immergée dans l'eau traversant ledit groupe de filtration, et **en ce que** lesdites électrodes (2) sont fixées audit culot de montage (3) par l'une de leurs extrémités (2a), et s'étendent en porte-à-faux à partir dudit culot de montage (3) pour être en contact avec l'eau traversant ledit groupe de filtration, lorsque ladite cellule d'électrolyse (1) est montée dans ledit groupe de filtration (30), ladite cellule d'électrolyse comportant au moins un évent d'échappement des gaz (12) destiné à communiquer avec l'eau traversant ledit groupe de filtration (30).

2. Cellule d'électrolyse selon la revendication 1, **caractérisée en ce que** ledit culot de montage (3) comporte des moyens de fixation (8) destinés à coopérer avec des moyens de réception (31) complémentaires prévus dans ledit groupe de filtration (30), de sorte que ladite cellule d'électrolyse (1) est montée dans ledit groupe de filtration (30) de manière amovible.

3. Cellule d'électrolyse selon la revendication 2, **caractérisée en ce que** lesdits moyens de fixation comportent au moins une languette ressort (8) pourvue d'un cran d'arrêt (10), agencée pour permettre un assemblage par clippage dans ledit groupe de filtration (30).

4. Cellule d'électrolyse selon l'une des revendications 1 à 3, **caractérisée en ce qu'**elle comporte plusieurs évents d'échappement des gaz (12) délimités entre ladite au moins une languette ressort (8) et une collerette d'appui (7) prévue sur le culot de montage (3) à l'opposé desdites électrodes (2).

5. Cellule d'électrolyse selon la revendication 1, **caractérisée en ce que** lesdites électrodes (2) sont liées l'une à l'autre par au moins une entretoise (13) garantissant ladite distance relative entre elles.

6. Cellule d'électrolyse selon la revendication 1, **caractérisée en ce que** ledit culot de montage (3) comporte un noyau central (6) entouré d'une enveloppe (5), ledit noyau central étant électriquement isolant, **en ce que** les extrémités (2a) correspondantes desdites électrodes (2) sont noyées dans ledit noyau central (6), et raccordées auxdits pôles par un câble électrique (4) émergeant dudit noyau central (6) et raccordé à un coffret de pilotage déporté.

7. Cellule d'électrolyse selon la revendication 6, **caractérisée en ce que** ledit câble électriques (4) comporte un connecteur étanche agencé pour connecter et déconnecter aisément la cellule d'électrolyse (1) dudit câble la reliant audit coffret de pilotage déporté dans un local technique éloigné d'une distance comprise entre 2m et 20m.

8. Cellule d'électrolyse selon l'une quelconque des revendications précédentes, **caractérisée en ce que** lesdites électrodes (2) comportent un nombre de plaques (20, 21) compris entre deux et N, N étant un nombre pair ou impaire, et **en ce que** lesdites plaques (20, 21) sont positionnées entre elles pour former un ou plusieurs couples comprenant une cathode et une anode.

9. Cellule d'électrolyse selon la revendication 1, **caractérisée en ce que** ledit culot de montage (3) comporte au moins un conduit traversant (15) destiné à recevoir un accessoire (16, 17) de contrôle et/ou de traitement choisi dans le groupe comprenant un indicateur de colmatage, un correcteur de pH.

10. Groupe de filtration (30) pour le traitement d'eau, notamment dans une piscine traitée au sel, ledit groupe de filtration comportant au moins une bouche d'aspiration (35), un couloir d'amenée d'eau (32), une pompe hydraulique (37), une colonne de filtration (38), une colonne d'aspiration (33) et un orifice de refoulement (36), **caractérisé en ce qu'**il comporte en outre au moins une cellule d'électrolyse (1) pour la désinfection de l'eau selon l'une quelconque de revendications 1 à 9, immergée dans ledit groupe de filtration (30) entre ladite bouche d'aspiration (35) et ledit orifice de refoulement (36), ledit au moins un évent d'échappement des gaz (12) étant configuré pour communiquer avec l'eau dudit couloir d'amenée d'eau (32).

11. Groupe de filtration selon la revendication 10, **caractérisé en ce que** ladite cellule d'électrolyse (1) est positionnée en aval de ladite colonne de filtration (38), de sorte que les électrodes (2) de ladite cellule d'électrolyse (1) ne sont pas soumises aux impuretés véhiculées par l'eau traversant ledit groupe de filtration (30).

12. Groupe de filtration selon l'une quelconque des revendications 10 et 12, **caractérisé en ce que** ledit couloir d'amenée d'eau (32) comporte au moins un orifice de réception (31) à travers duquel est positionnée ladite cellule d'électrolyse (1) et auquel est fixé ledit culot de montage (3).

13. Groupe de filtration selon la revendication 12, **caractérisé en ce que** ledit orifice de réception (31) et le culot de montage (3) délimitent entre eux des passages qui communiquent avec les évents d'échappement des gaz (12).

14. Groupe de filtration selon la revendication 10, **caractérisé en ce que** la cellule d'électrolyse comporte au moins un conduit traversant (15), prévu dans le culot de montage (3), et accessible depuis ledit couloir d'amenée d'eau (32) et comporte un accessoire (16, 17) de contrôle et/ou de traitement choisi dans le groupe comprenant un indicateur de colmatage, un correcteur de pH.
